# EUROPEAN PATENT APPLICATION

(11) **EP 4 814 841 A1**
(43) Date of publication of application: **30.09.2026**
(21) Application number: 25192545.9
(22) Date of filing: 29.07.2025
(51) Int. Cl.: G06Q 10/20, G06V 20/20, G05B 19/418, G06F 3/01

(54) **WORK SUPPORT SYSTEM AND PROGRAM**

(30) Priority: 26.03.2025 JP 2025051628
(71) Applicant: FUJIFILM Business Innovation Corp., Minato-ku Tokyo (JP)
(72) Inventor: KANEKO, Atsuki, Yokohama-shi, Kanagawa (JP); SASAKI, Hirotake, Ebina-shi, Kanagawa (JP); KATO, Ryoma, Yokohama-shi, Kanagawa (JP)
(74) Representative: Becker Kurig & Partner Patentanwälte mbB

(57) **Abstract**

A work support system includes: an imaging unit that images a work site at which an operator performs work on a working target; a display unit that displays information; a storage unit that stores the information; and a control unit that performs an information process and control, in which the control unit specifies a placement location for placing an article related to the work at the work site, and displays information on the placement location on the display unit alone or in combination with a video captured by the imaging unit, as support information.

## Description

### BACKGROUND OF THE INVENTION

### (i) Field of the Invention

The present invention relates to a work support system and a program.

### (ii) Description of Related Art

In JP2021-51519A (Claim 1, [0009], and FIGS. 1 to 3) described below, a work support system including an MR device, a database, and a support server is described.

The MR device includes a display having light transmittance and including a real space projection portion and a virtual space display unit, and a camera. The database stores work support information for supporting on-site work by an operator. The support server reads out the work support information from the database, and transmits the work support information to the MR device.

The MR device transmits a video of the work site captured by the camera to the support server while displaying a scene of the work site on the real space projection portion. In addition, the MR device displays the work support information received from the support server on the virtual space display unit.

In the work support system, the on-site work can be easily executed based on the work support information received from the support server while the operator visually recognizes a device or equipment at the site through the display of the MR device.

### SUMMARY OF THE INVENTION

An object of the present invention is to provide work support for preventing, in a work site at which an operator performs work on a working target, the operator from becoming confused about a location for placing an article related to the work or a location at which the article is placed.

According to a first aspect of the present disclosure, there is provided a work support system including: an imaging unit that images a work site at which an operator performs work on a working target; a display unit that displays information; a storage unit that stores the information; and a control unit that performs an information process and control, in which the control unit specifies a placement location for placing an article related to the work at the work site, and displays information on the placement location on the display unit alone or in combination with a video captured by the imaging unit, as support information.

According to a second aspect of the present disclosure, in the work support system according to the first aspect, the control unit may specify the placement location before the work is started or after first work in the work is ended.

According to a third aspect of the present disclosure, in the work support system according to the second aspect, the control unit may specify, as the placement location, any location of a designated location that is input and designated by the operator, a use location that is determined as the placement location by the control unit using a location used by the operator for placing the article, and a proposed location that is proposed by the control unit.

According to a fourth aspect of the present disclosure, in the work support system according to according to the third aspect, the control unit may display a selection image from which the operator selects any location of the designated location, the use location, and the proposed location as the placement location, on the display unit.

According to a fifth aspect of the present disclosure, in the work support system according to any one of the first to fourth aspects, the control unit may display the information on the placement location when the work is started.

According to a sixth aspect of the present disclosure, the work support system according to the fifth aspect, may further include: a detection unit that detects a positional relationship between an object captured by the imaging unit and the operator, in which in a case where based on information on the positional relationship detected by the detection unit, the positional relationship is determined such that the placement location is present on a rear side of the imaged object by using the operator as a reference, the control unit may not display the information on the placement location.

According to a seventh aspect of the present disclosure, the work support system according to the fifth aspect, may further include: a detection unit that detects a positional relationship between an object captured by the imaging unit and the operator, in which in a case where based on information on the positional relationship detected by the detection unit, the positional relationship is determined such that the placement location is present on a rear side of the imaged object by using the operator as a reference, the control unit may display a selection image from which the operator selects whether to display the information on the placement location through the imaged object, on the display unit.

According to an eighth aspect of the present disclosure, the work support system according to any one of the first to seventh aspects, may further include: a detection unit that detects a positional relationship between an object captured by the imaging unit and the operator, in which in a case where based on information on the positional relationship detected by the detection unit, it is determined that the operator approaches the placement location, the control unit may display warning information on the display unit.

According to a ninth aspect of the present disclosure, in the work support system according to any one of the first to eighth aspects, in a case where it is determined that the article has a size out of a range of the placement location, the control unit may display information on a placement location that is enlarged than the placement location, on the display unit.

According to a tenth aspect of the present disclosure, in the work support system according to any one of the first to ninth aspects, the work may be detachment work of detaching a component from the working target, and the article may be at least one of a detachment component detached by the detachment work, a replacement component, and a tool used for the detachment work.

According to an eleventh aspect of the present disclosure, in the work support system according to any one of the first to tenth aspects, the information on the placement location may be an image including a mark indicating the placement location.

According to a twelfth aspect of the present disclosure, in the work support system according to any one of the first to eleventh aspects, the information on the placement location may be an image including a three-dimensional image in which the placement location is represented in three dimensions.

According to a thirteenth aspect of the present disclosure, the work support system according to any one of the first to twelfth aspects, may further include: an operation unit that performs an input operation of the operator by tracking a motion of the operator pointing to an operation image displayed on the display unit.

According to a fourteenth aspect of the present disclosure, in the work support system according to any one of the first to thirteenth aspects, the work support system may be configured as a system including a mobile device that is carried and used by the operator.

According to a fifteenth aspect of the present disclosure, in the work support system according to the fourteenth aspect, the mobile device may be a head-mounted device that is worn on a head portion of the operator and is used.

According to a sixteenth aspect of the present disclosure, there is provided a program causing a computer to execute: a function of specifying a placement location for placing an article related to work performed on a working target by an operator at a work site of the work; and a function of displaying information on the placement location as support information.

With the work support system according to the first aspect of the present disclosure, it is possible to perform work support of preventing the operator from being confused about a location at which the article related to the work is to be placed by the operator or a location at which the article is placed by the operator at the work site of the work performed on the working target by the operator.

With the work support system according to the second aspect of the present disclosure, the information on the placement location used as the support information is managed as information specified in accordance with the work site at an appropriate time.

With the work support system according to the third aspect of the present disclosure, the degree of freedom of the specifying of the placement location is increased as compared with a case where the placement location is determined without an option.

With the work support system according to the fourth aspect of the present disclosure, it is possible to give an opportunity to the operator to select the specifying of the placement location.

With the work support system according to the fifth aspect of the present disclosure, the operator does not hesitate about a location at which the article related to the work is to be placed.

With the work support system according to the sixth aspect of the present disclosure, the display of the information on the placement location may not interfere with the field of view of the operator who performs the work.

With the work support system according to the seventh aspect of the present disclosure, the operator can recognize a placement location, which is not visible, when the operator wants to check the location.

With the work support system according to the eighth aspect of the present disclosure, it is possible to avoid a risk that the operator unintentionally touches the article related to the work at the placement location.

With the work support system according to the ninth aspect of the present disclosure, it is possible to avoid a situation in which the operator is confused since the article related to the work cannot be completely placed in the placement location, or a situation in which an excess portion of the article becomes an obstacle in a case where the operator moves.

With the work support system according to the tenth aspect of the present disclosure, it is possible to support work of preventing a location at which the detachment component detached in the detachment work, the replacement component or the tool used in the detachment work is to be placed from being unrecognized.

With the work support system according to the eleventh aspect of the present disclosure, the placement location can be easily recognized as compared with a case where the placement location is not displayed as the image including the mark.

With the work support system according to the twelfth aspect of the present disclosure, the placement location can be accurately recognized as compared with a case where the placement location is not displayed as the image including the three-dimensional image.

With the work support system according to the thirteenth aspect of the present disclosure, it is possible to easily perform the input operation of the information as compared with a case where the operation unit for performing the input operation of the operator by tracking the motion of the operator pointing to the operation image displayed on the display unit is not provided.

With the work support system according to the fourteenth aspect of the present disclosure, the operator can receive the support for the work by carrying the work support system, as compared with a case where the work support system is not configured as a system including the mobile device.

With the work support system according to the fifteenth aspect of the present disclosure, a hand of the operator is free and the operator can easily perform the work, as compared with a case where the mobile device is not the head-mounted device.

With the program according to the sixteenth aspect of the present disclosure, it is possible to prevent the operator from being confused about a location at which the article related to the work is to be placed by the operator or a location at which the article is placed by the operator at the work site of the work performed on the working target by the operator.

### BRIEF DESCRIPTION OF THE DRAWINGS

Exemplary embodiment(s) of the present invention will be described in detail based on the following figures, wherein:
FIG. 1 is a schematic perspective view illustrating an example of a work support system and a work site according to Exemplary Embodiment 1;
FIG. 2A is a schematic front view illustrating a configuration example of the work support system in FIG. 1, and FIG. 2B is a schematic side view of the work support system in FIG. 2A;
FIG. 3A is a block diagram of a head-mounted device constituting the work support system, and FIG. 3B is a diagram illustrating a storage unit;
FIG. 4 is a schematic perspective view illustrating an example of the work site and a placement location in FIG. 1;
FIG. 5 is a flowchart illustrating a flow of work using the work support system;
FIG. 6 is a diagram illustrating an example of display contents of the work support system before a start of the work;
FIG. 7 is a flowchart illustrating a flow of a work support process of the work support system;
FIG. 8 is a flowchart illustrating a flow of a process of specifying the placement location;
FIG. 9A is a diagram illustrating an example of a selection image related to specifying the placement location, and FIG. 9B is a diagram illustrating an example of specifying and managing the placement location for the work;
FIG. 10 is a flowchart illustrating a flow of a display process of information on the placement location;
FIG. 11 is a diagram illustrating an example of a display content of the work support system after the start of the work;
FIG. 12 is a diagram illustrating an example of a display content of the information on the placement location;
FIG. 13A is a diagram illustrating an example in which the information on the placement location existing on a rear side of an object is not displayed from a viewpoint of an operator, and FIG. 13B is a diagram illustrating an example in which the information on the placement location in FIG. 13A is displayed;
FIG. 14 is a flowchart illustrating a flow of a process of a warning display;
FIG. 15A is a diagram illustrating an example of a display check image of the information on the placement location, FIG. 15B is a diagram illustrating an example of an enlarged setting check image of the placement location, and FIG. 15C is a diagram illustrating an example of a warning display image; and
FIG. 16A is an outline view illustrating a modification example of the work support system, and FIG. 16B is an outline view illustrating another configuration example of the work support system.

### DETAILED DESCRIPTION OF THE INVENTION

Hereinafter, exemplary embodiments of the present invention will be described.

### Exemplary Embodiment 1.

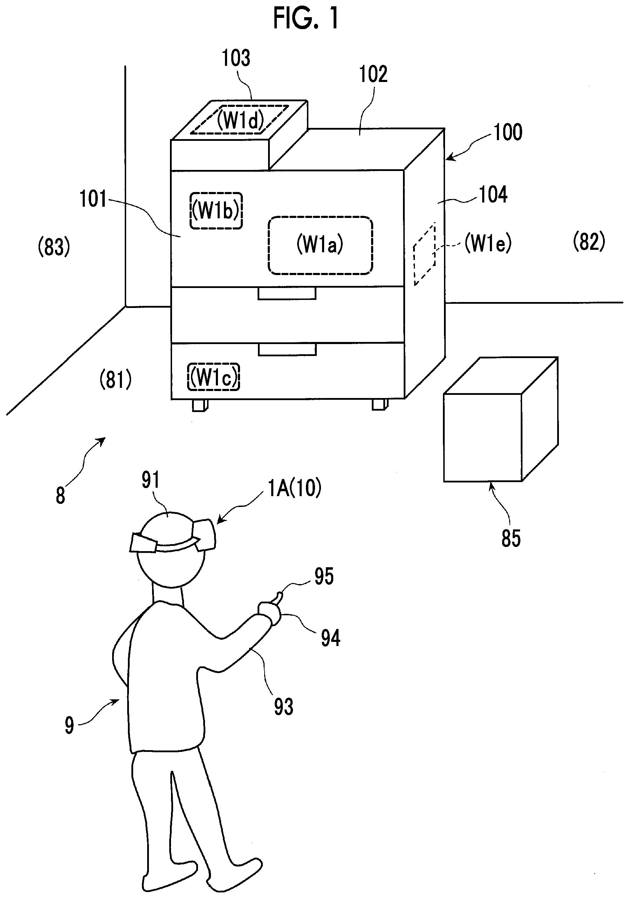

FIG. 1 is a diagram illustrating an example of a work support system and a work site according to Exemplary Embodiment 1 of the present invention.

The work support system 1 is a system that supports work performed by an operator 9 at a work site 8 at which a working target 100 is placed.

The working target 100 is an object on which work is to be performed. The working target 100 is, for example, various machines, apparatuses, and the like represented by an image forming apparatus or the like. The working target 100 is not limited to the described devices.

The work is work of inspecting, repairing, and partially replacing the working target 100. These works include specific work such as detachment work or attachment work.

The detachment work is work of detaching a component constituting the working target 100. The attachment work is work of attaching the detached detachment component or a replacement component to be replaced. The replacement component is not limited to a new component to be replaced, and also includes a component that is repaired after being detached.

The work site 8 is a location having a space in which work can be performed. The work site 8 include, for example, a location such as indoors having a floor 81, a plurality of walls 82 and 83, and the like.

In the work site 8 illustrated in FIG. 1, the working target 100 is present at a position on the floor 81, which is away from the plurality of walls 82 and 83.

In addition, in the work site 8 illustrated in FIG. 1, a peripheral object 85 other than the working target 100 is present. The peripheral object 85 is an object that is present at a position in the vicinity of the working target 100 in the floor 81. The peripheral object 85 is, for example, an object such as a workbench or a table.

The work support system 1 according to Exemplary Embodiment 1 is configured as a work support system 1A that is a system including a mobile device 10. The mobile device 10 is a device that can be carried and used by the operator 9.

In addition, the work support system 1A is configured with a single head-mounted device 11 that is an example of the mobile device 10. That is, the work support system 1A is a stand-alone type system configured with only the head-mounted device 11.

The head-mounted device 11 is a device that is worn on a head portion 91 of the operator 9 and is used.

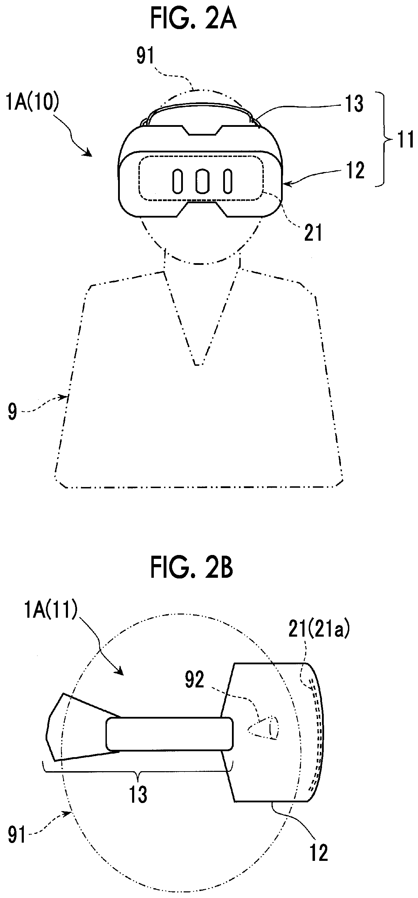

As illustrated in FIGS. 2A and 2B, the head-mounted device 11 includes a device main body 12 and a mounting band 13.

The device main body 12 is a portion having main components and functions.

The device main body 12 is used in a state of being placed on a face of the head portion 91 of the operator 9 (mainly in front of eyes 92) and covering the eyes 92 and the surrounding portion. The device main body 12 has a housing consisting of a shape and a structure that can be mounted to cover a part of the face of the operator 9. The device main body 12 in Exemplary Embodiment 1 adopts a goggle-type housing.

The mounting band 13 is a member that is attachably and detachably worn on the head portion 91 of the operator 9 to support the device main body 12.

Such a head-mounted device 11 is also referred to as a head-mounted device or a head-mounted display.

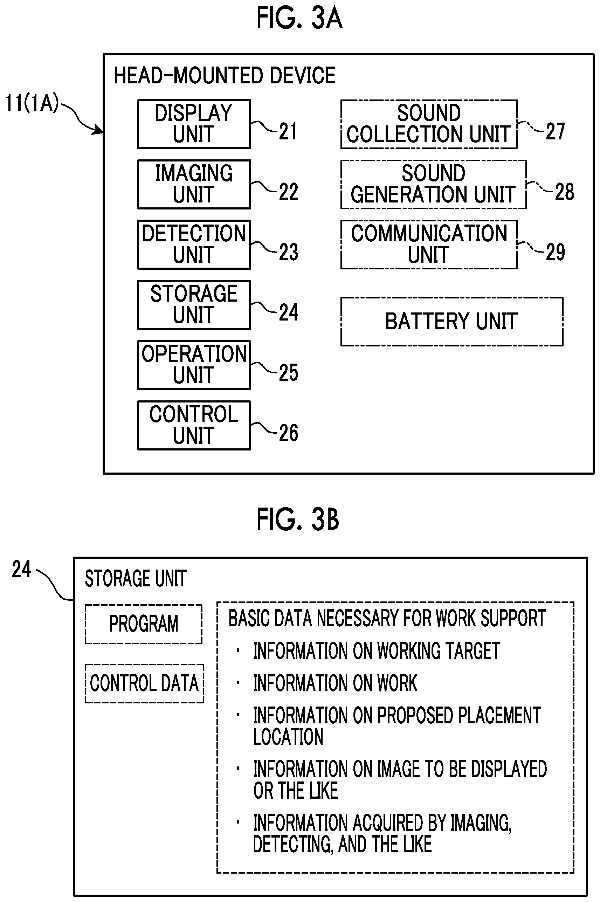

The head-mounted device 11 is equipped with a display unit 21, an imaging unit 22, a detection unit 23, a storage unit 24, an operation unit 25, a control unit 26, and the like (see FIG. 3A).

The head-mounted device 11 may be equipped with a sound collection unit 27, a sound generation unit 28, a communication unit 29, a battery unit, and the like (see FIG. 3A).

The display unit 21 is a portion that displays various types of information.

The display unit 21 has a light non-transmissive type through which an outside cannot be seen such as the work site 8 or a light transmission type through which the outside can be seen. In Exemplary Embodiment 1, the display unit 21 having a light non-transmissive type is applied.

The display unit 21 is configured by using required components such as a liquid crystal display panel, an organic EL display panel, an optical element, and a light guide plate.

The imaging unit 22 is a portion that images the work site 8 at which the operator 9 performs work on the working target 100.

The imaging unit 22 is configured with a camera, an image processing circuit, or the like that obtains information on a subject, such as the work site 8, as pixels of the three primary colors.

The detection unit 23 is a portion that detects information required for an information process or a control operation by the control unit 26.

The detection unit 23 acquires information or performs a recognition process required for recognizing the environment such as a state of the work site 8 and a status change, or recognizing a human body such as a position and a motion of the operator 9, for example.

The detection unit 23 is configured with, for example, a depth sensor, an inertial measurement sensor, or the like. The depth sensor is a sensor that acquires information on a distance between the head-mounted device 11 and a target object and a distance between the target objects. The target object at this time is an imaged object. The inertial measurement sensor is a sensor that acquires information such as an angular velocity and a movement speed according to a motion of the target object.

The storage unit 24 is a portion that stores various types of information.

The storage unit 24 is configured with a read only memory (ROM), a random access memory (RAM), another storage, and the like.

The storage unit 24 stores various programs, control data, information such as basic data required for work support, and the like (see FIG. 3B).

The program includes a program that controls basic operations of the head-mounted device 11, a program that executes functions required for supporting work, and the like.

The basic data required for the work support is information on a working target, information on work, information on a proposed placement location, information on an image to be displayed, and the like, and information acquired by imaging, detection, and the like.

Among these, the information on the working target is information for identifying the assumed working target 100. In addition, information on a shape or a structure of an entirety, a part, or the like of the working target 100 is also included. The information on the shape or structure is, for example, 3D model information such as CAD data of the working target 100.

The information on the work is information on a type, a portion, a procedure, and the like of the work performed by the operator 9 on the working target 100.

The information on the proposed placement location is information on a proposed location (Pz) which is one of specific options of a placement location P to be described below.

The information on the image and the like to be displayed is template information such as an image or a message to be displayed on the display unit 21 for supporting the work.

The information acquired by imaging, detection, and the like is image information obtained at any time from the imaging unit 22, detection information obtained at any time from the detection unit 23, and the like.

The operation unit 25 is a portion with which the operator 9 performs an input operation.

The operation unit 25 can be configured with an operation device (controller) that is operated by the operator 9 with a hand 94 and is a separate body from the device main body 12. Meanwhile, from the viewpoint of ease of work and the like, for example, it is preferable that the operation unit 25 is configured to implement the input operation by reading a motion of the operator 9.

For example, the operation unit 25 adopts a configuration in which the input operation of the operator 9 is performed by tracking the motion of the operator 9 pointing to an operation image (screen) displayed on the display unit 21.

The operation image is an image that can be selected by the operator 9 or an image to which the motion (trajectory) of the operator 9 is input as information.

Such an operation unit 25 is configured by using, for example, a technique such as hand tracking or eye tracking.

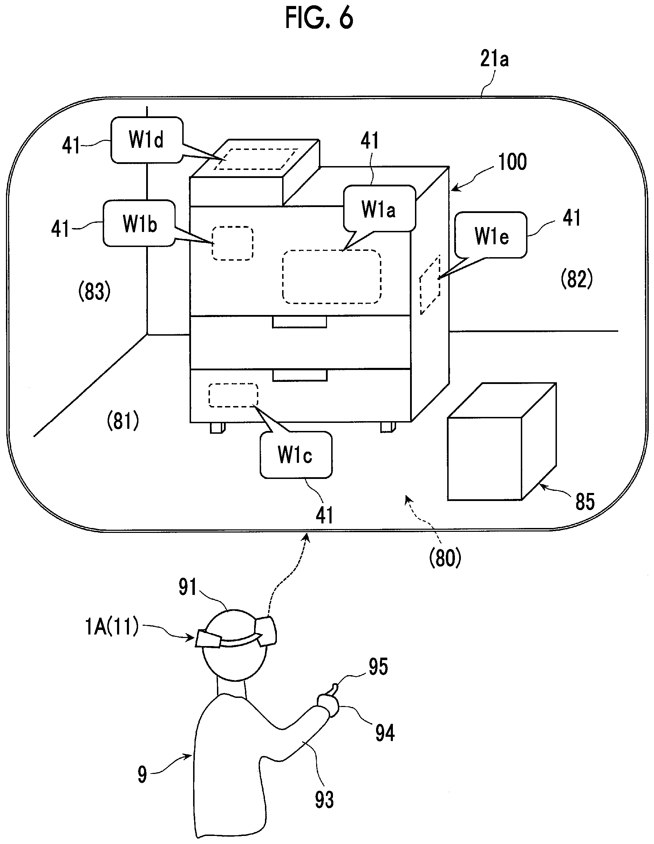

In a case where the hand tracking technique is used, the input operation can be performed by analyzing and tracking a motion of the hand 94 or a finger 95 (see FIG. 6 and the like) of the operator 9 with respect to the operation image from a captured image or detection information. In a case where the eye tracking technique is used, the input operation can be performed by tracking a motion of the eye 92 of the operator 9 with respect to the operation image.

A reference numeral 93 in FIG. 6 or the like denotes an arm of the operator 9.

The control unit 26 is a portion for performing an information process or control.

The control unit 26 is configured with a computer including a processor (processing apparatus), a memory, an input and output unit, and the like.

The control unit 26 reads a program and the like stored in the storage unit 24 or the like, performs a required arithmetic process or an information process, and controls an operation of the control target.

The control unit 26 in Exemplary Embodiment 1 is also configured to perform an information process or control required for supporting the work.

That is, the control unit 26 performs an information process or control for specifying the placement location P for placing an article 110 related to the work at the work site 8. In addition, the control unit 26 performs an information process or control for displaying information on the placement location P on the display unit 21 as support information 50.

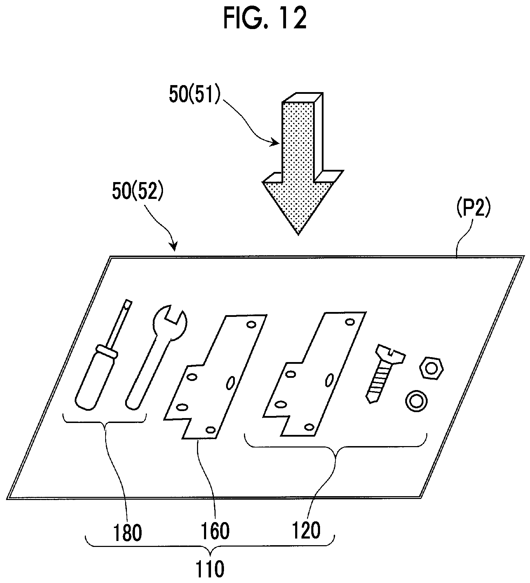

Here, the article 110 related to the work is, for example, a detachment component 120 or a tool 180 used for the work (see FIG. 12).

The detachment component 120 is a component that is detached from the working target 100 in detachment work. The detachment component 120 also includes a fixing tool such as a screw or a nut. The tool 180 is a tool used for work such as the detachment work and attachment work. The tool 180 includes, for example, a plus or minus driver, various wrenches, and the like.

In addition, the article 110 related to the work also includes a replacement component 160 that is replaced and attached in the attachment work of the working target 100.

The placement location P is a location at which the article 110 related to the work can be temporarily placed in the work site 8.

Examples of the placement location P include a part of the floor 81 on which the working target 100 is placed, a part of the peripheral object 85, a part of the working target 100, and the like.

The control unit 26 functions to specify the placement location P according to the work site 8 for each work on different portions of the same working target 100.

The specifying of the placement location P is performed in any of the following aspects in a case of performing a plurality of works which are the same work on the different portions. One aspect is an aspect in which a location is specified each time the plurality of works are performed on different portions. The other aspect is an aspect in which all the placement locations P are specified at once before performing the plurality of works at different portions.

The information on the placement location P as the support information 50 is information that can inform the operator 9 of where the placement location P specified for each work is.

As the information on the placement location P as the support information 50, for example, information of the following type or format is used.

That is, the information is information consisting of a mark 51 indicating a position of the placement location P. The information consisting of the mark 51 is configured with a symbol such as an arrow, a figure, or a text.

In addition, the information is information or the like consisting of a three-dimensional image 52 in which the placement location P is represented in three dimensions.

In addition, the control unit 26 functions to display the information on the placement location P, which is the support information 50, in combination with a video captured by the imaging unit 22 on the display unit 21.

In this case, the control unit 26 displays the video of the work site 8 captured by the imaging unit 22 on the display unit 21, and then combines and displays the information on the placement location P.

At this time, the control unit 26 displays the information on the placement location P by using a mixed reality (MR) or augmented reality (AR) technique.

### (Use and Operation of Work Support System)

Next, a use and an operation of the work support system 1A will be described.

Here, it is assumed that the work site 8 is an indoor space having the floor 81, the wall 82 on a back side, and the wall 83 on a left side as illustrated in FIG. 1.

In addition, it is assumed that the peripheral object 85 is placed at a position on the floor 81 on the right and obliquely front side of the working target 100 in the work site 8.

It is assumed that the working target 100 is a device having an external shape having a front surface portion 101, an upper surface portion 102, a projecting portion 103, a side surface portion 104, and the like.

In addition, it is assumed that the working target 100 is a device that requires inspection and replacement repair. More specifically, a case is assumed in which the working target 100 is a device having detachment work W1 for 5 portions a to e.

In FIG. 1 and the like, W1a indicates detachment work for the portion a, W1b indicates detachment work for the portion b, and W1c indicates detachment work for the portion c. In addition, in FIG. 1 and the like, W1d indicates detachment work for the portion d, and W1e indicates detachment work for the portion e.

The portions a and b are portions at which work is started from an upper portion of the front surface portion 101 of the working target 100, respectively. The portion c is also a portion at which work is started from a lower portion of the front surface portion 101. The portion d is a portion at which work is started from an upper portion of the projecting portion 103. The portion e is a portion at which work is started from a side of the side surface portion 104.

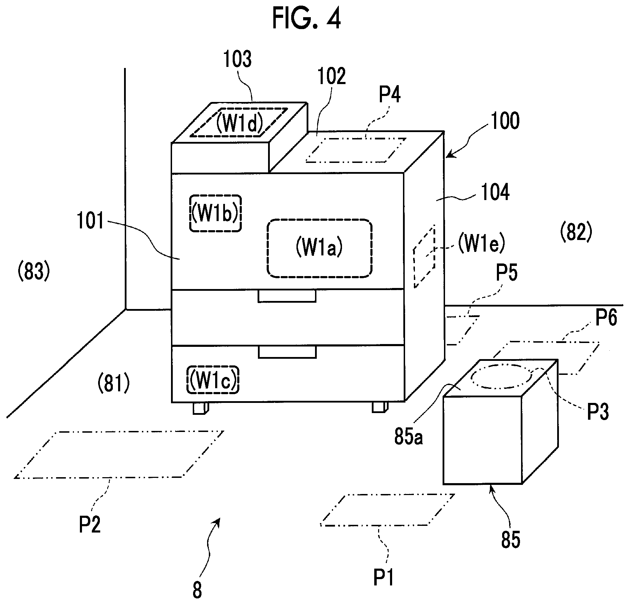

Further, it is assumed that the following six placement locations P1 to P6 can be adopted as the placement location P for the work site 8 (see FIG. 4).

The placement location P1 is a part (rectangular area) of the floor 81 on a front side of the peripheral object 85 as viewed from a position of the operator 9 illustrated in FIG. 1.

The placement location P2 is a part (rectangular area) of the floor 81 on a front side of the working target 100 as viewed from the operator 9.

The placement location P3 is an upper surface portion 85a of the peripheral object 85.

The placement location P4 is a part of the upper surface portion 102 of the working target 100.

The placement location P5 is a part (rectangular area) of the floor 81, which is located on a rear side (back side) of the working target 100 as viewed from the operator 9.

The placement location P6 is a part (rectangular area) of the floor 81, which is located on a rear side of the peripheral object 85 as viewed from the operator 9.

In addition, it is assumed that the placement location P2 is a location consisting of a larger area than the placement location P1.

In addition, the placement location P3 is a location with the smallest range as compared with the other placement locations P1, P2, and P4 to P6.

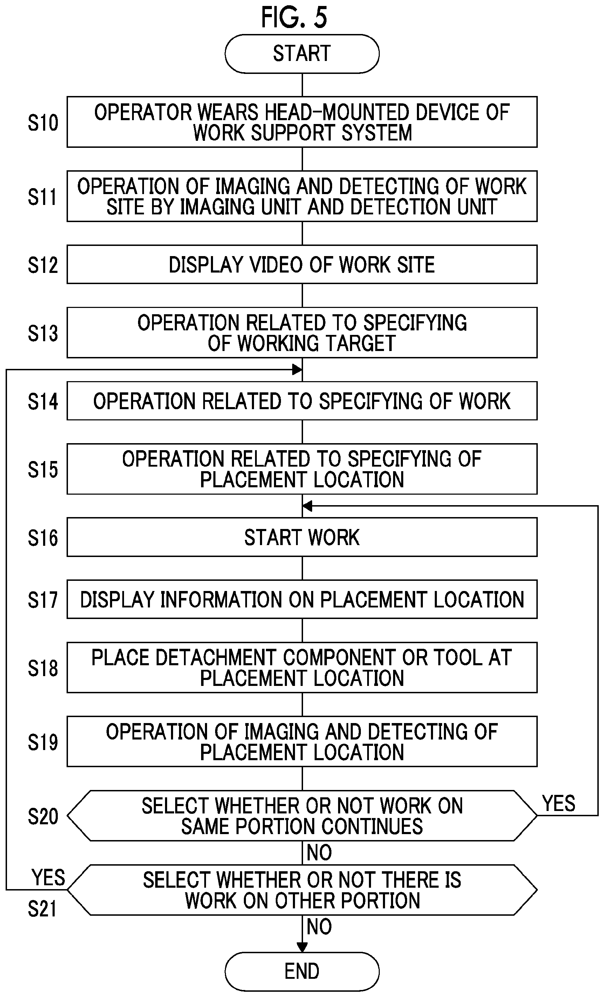

First, the operator 9 wears the head-mounted device 11 on the head portion 91 to use the work support system 1A (step S10 in FIG. 5).

The head-mounted device 11 is automatically started in accordance with the wearing or is started by a manual operation such as pressing a switch provided in the device main body 12.

Next, the head-mounted device 11 performs imaging and detecting of the work site 8 by the imaging unit 22 and the detection unit 23 (step S11).

At this time, the imaging of the work site 8 is performed by the operator 9 wearing the head-mounted device 11 looking at (viewing) the work site 8. In addition, the detection of the work site 8 at this time is performed by the operator 9 directing the head-mounted device 11 to the work site 8.

Next, the head-mounted device 11 displays a video 80 of the work site 8 captured by the imaging unit 22 on the display unit 21 (step S12).

The video 80 at this time is displayed on a display screen 21a of the display unit 21 as a video in which a state of the work site 8 is imaged by the operator 9 with the naked eye (see FIG. 6). In addition, the video 80 at this time is displayed as a color image that substantially corresponds to a real image of the work site 8. Further, the working target 100, the floor 81, the walls 82 and 83, the peripheral object 85, and the like included in the video 80 at this time are captured objects.

Next, in the head-mounted device 11, an operation related to specifying of the working target 100 is performed (step S13).

The operation related to the specifying of the working target 100 is an operation for specifying a type (a model or the like) of the working target 100.

The operation related to the specifying is performed automatically or manually by the operator 9 selecting a specific image displayed on the display unit 21.

In a case of being automatically performed, collation is performed by collating image information of the working target 100 captured by the imaging unit 22 with information on the working target stored in the storage unit 24. For example, in a case where a model name or a product number is attached to the working target 100, collation regarding the model name or the product number is performed.

Next, in the head-mounted device 11, an operation related to specifying of work is performed (step S14).

The operation related to the specifying of the work is an operation for specifying a type and a portion of the work to be executed.

The operation related to the specifying is manually performed by the operator 9 selecting a specific image 41 displayed on the display unit 21.

In a case where the operator 9 performs a motion of bringing the hand 94 or the finger 95 close to portions (a to e) on which the work is to be performed, the specific image 41 is displayed for each portion (see FIG. 6). The display of the specific image 41 is performed under the control of the control unit 26.

The specific image 41 at this time includes text information (W1a or the like) indicating the type and the portion of the work. In addition, the motion of the finger 95 and the like of the operator 9 at this time is tracked and recognized by a hand tracking technique of the operation unit 25.

The operation related to the specifying is performed by the operator 9 selecting the specific image 41 at which the work is to be performed with the finger 95, and performing a stop motion. Accordingly, the control unit 26 performs a process of specifying and managing the type and the portion of the work indicated in the specific image 41.

Next, in the head-mounted device 11, an operation related to specifying of the placement location P for the specified work is performed (step S15).

Details of the operation or a process related to the specifying of the placement location P at this time will be described below.

In a case where the specific placement location P or preparation of the specific placement location P is completed by the head-mounted device 11, the operator 9 starts the work (step S16).

In the head-mounted device 11, the start of the work is recognized by, for example, determining information such as an input operation of the operator 9.

Here, a case where the operator 9 performs the detachment work (W1a) on the portion a and the placement location P2 is specified as the placement location P will be described.

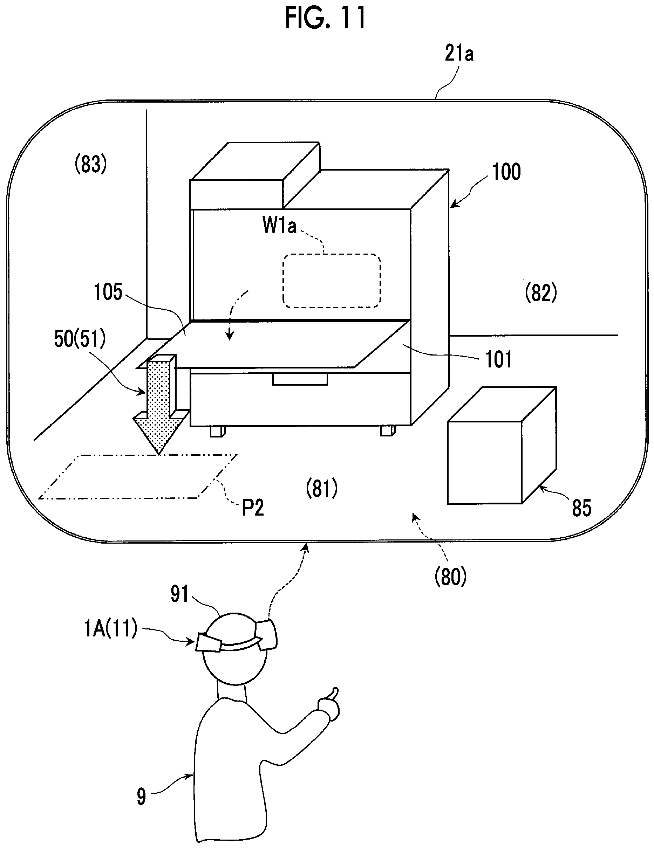

In addition, the detachment work (W1a) is performed in a state where an opening and closing portion 105 at the front surface portion 101 of the working target 100 is opened (see FIG. 11). The opening and closing portion 105 is, for example, an exterior door or the like that is opened and closed with a hinge of a lower end portion as a fulcrum.

Then, in the head-mounted device 11, in a case where the work is started, information on the specified placement location P is displayed as the support information 50 on the display unit 21 (step S17).

The display of the information on the placement location P at this time is performed under the control of the control unit 26. In addition, the information on the placement location P illustrated in FIG. 11 is information consisting of the mark 51 of an arrow indicating a location of the placement location P2.

Regarding the information on the placement location P, as illustrated in FIG. 12, information consisting of a three-dimensional image 52 in which the placement location P is represented in three dimensions may be displayed. The information consisting of the three-dimensional image 52 makes it easy to grasp an entity (range, environment, and the like) of the placement location P.

In addition, the information on the placement location P may be displayed as information obtained by combining the information on the mark 51 and the information on the three-dimensional image 52.

The information on the placement location P is not displayed by a specific method of specifying the placement location P, which will be described below.

The specific method for the placement location P is a case where a use location (Py) to be described below is selected and specified as the placement location P. In this case, the information on the placement location P is not displayed in a case where first work in the works is started. In this case, the display is performed from a time when second or subsequent work is started.

Next, the operator 9 places the article 110 related to the work at the specified placement location P (step S18).

In a setting example of this description, the detachment component 120 detached from the portion a in the detachment work W1 is placed in the specified placement location P2.

The operator 9 who performs the detachment work can check the information on the placement location P through the display unit 21 of the head-mounted device 11 immediately before placing the detachment component 120.

Accordingly, the operator 9 does not have to be confused about a location at which the detachment component 120 is to be placed even in a case where the location is not prepared in advance, for example, when performing the detachment work W1.

Next, in the head-mounted device 11, imaging and detecting of the placement location P are performed after the work is started (step S19).

At this time, the imaging and the detecting of the placement location P are automatically performed in accordance with an operation of the operator 9 wearing the head-mounted device 11. That is, the operation is performed in conjunction with the operation of the operator 9 placing the detachment component 120 in the specified placement location P2.

Accordingly, in the head-mounted device 11, information for grasping a status of the placement location P2 is obtained.

In addition, the head-mounted device 11 can manage a location at which the article 110 related to the work for the detachment component 120 or the like is actually placed. In addition, the location at which the article 110 related to the work is actually placed is managed, so that the operator 9 may not have confusion about the location at which the article 110 is placed.

Next, in the head-mounted device 11, each time one work in the detachment work is completed, whether or not the work on the same portion continues is checked (determined) (step S20).

In a setting example of this description, the work on the same portion is the detachment work W1 on the portion a.

The completion of one work in the detachment work at this time is recognized by, for example, determining information such as an input operation of the operator 9.

At this time, the determination is performed, for example, by the control unit 26 displaying a check image as to whether the work on the same portion continues on the display unit 21 and determining a selection result of the operator 9.

In a case where it is determined in step S20 that the work on the same portion continues, the process returns to step S16, and the operation described above is repeated in the same manner.

In this case, the subsequent work is performed, and the head-mounted device 11 is operated in the same manner.

Specifically, in a case where the subsequent work is started (step S16), the information on the placement location P as the support information 50 is displayed (step S17). Subsequently, the article 110 related to the work is placed at the specified placement location P (step S18), and imaging and detecting for the placement location P are performed (step S19).

On the other hand, in a case where it is determined in step S20 that the work on the same portion does not continue, whether or not there is work for another different portion is checked (determined) (step S21).

In a setting example of this description, it is checked whether or not the detachment work W1 on a portion (any portion of b to e) other than the portion a is performed.

In addition, the determination at this time is performed, for example, by the control unit 26 displaying a check image as to whether or not the work on the other portion continues on the display unit 21 and determining a selection result of the operator 9.

In a case where it is determined in step S21 that there is work on the other portion, the process returns to step S14, and the operation described above is repeated in the same manner.

In this case, the work on the other portion is performed, and the head-mounted device 11 is operated in the same manner.

Specifically, an operation for specifying the work on the other portion is performed (step S14), and an operation for specifying the placement location P for the work is performed (step S15). Next, in a case where the work on the other portion is started (step S16), information on the placement location P is displayed (step S17). Subsequently, the article 110 related to the work is placed at the specified placement location P (step S18), and imaging and detecting for the placement location P are performed (step S19).

On the other hand, in a case where it is determined in step S21 that there is no work on another portion, the work on one same working target 100 is ended.

Meanwhile, in a case where there is another different working target 100 for the same work at the work site 8 and the work on the different working target 100 is to be performed, the process returns to step S13, and the operation described above is repeated in the same manner.

### (Work Support Process)

Next, the operation of the work support process by the head-mounted device 11 of the work support system 1A will be described in detail.

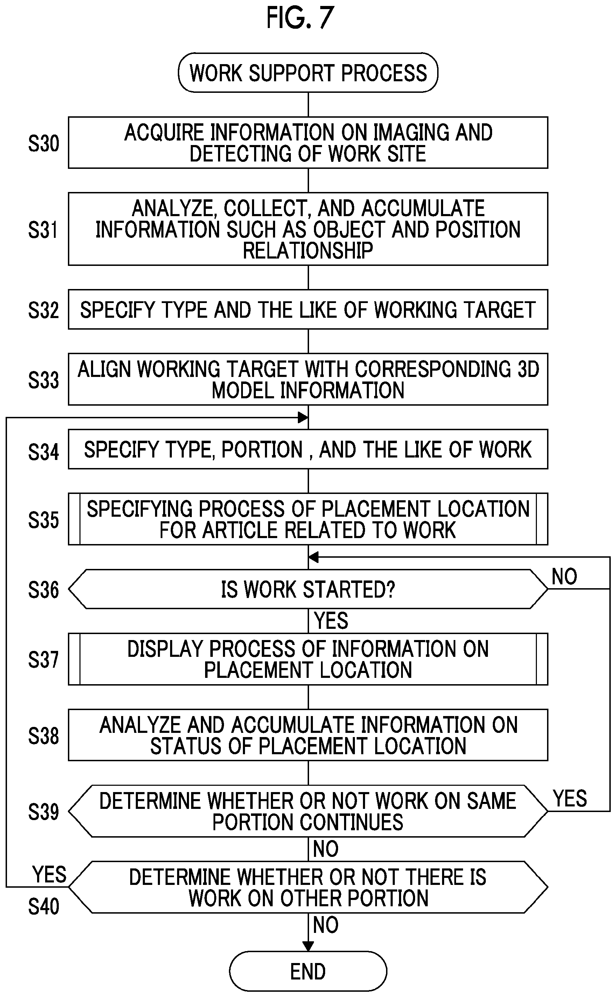

The work support process starts with acquisition of information on imaging and detecting of the work site 8 (step S30 in FIG. 7).

The imaging information is obtained from the imaging unit 22 as, for example, RGB pixel information. The detection information is obtained from the detection unit 23 as, for example, three-dimensional point cloud information.

Next, in the head-mounted device 11, analysis, collection, and accumulation of information, such as a positional relationship, of an object at the work site 8 are performed (step S31).

Here, the object is the working target 100, the floor 81, the walls 82 and 83, the peripheral object 85, or the like. In addition, the positional relationship is a positional relationship between the operator 9 and the object, a positional relationship between the objects, or the like.

At this time, the analysis or the collection of the information is performed by generating and acquiring information in which the environment of the work site 8 is converted into, for example, a 3D map using the information on the imaging and the detecting.

Next, in the head-mounted device 11, a type and the like of the working target 100 are specified (step S32).

The specifying at this time is performed by a manual operation in which the operator 9 selects a specific image displayed on the display unit 21 as described above, or is automatically performed.

In a case of being performed manually, the specifying is performed by the control unit 26 determining a result of a selection operation of the operator 9 for the specific image.

Next, in the head-mounted device 11, alignment between the working target 100 and the corresponding 3D model information is performed (step S33).

The 3D model information is information in which a shape and a structure of the working target 100 are generated in three dimensions. As the 3D model information, for example, computer-aided design (CAD) data or the like of the working target 100 is applied.

This alignment is work of matching the 3D model information with a position of the working target 100 in the real world.

By performing the alignment, an image to be displayed on the display unit 21 or the information on the placement location P can be displayed in a positional relationship appropriate for the working target 100 or the work site 8.

Next, in the head-mounted device 11, a type, a portion, and the like of work are specified (step S34).

The specifying at this time is performed by the operator 9 selecting the specific image 41 displayed on the display unit 21 with a manual operation, as described above. In the manual specifying, the specifying is performed by the control unit 26 determining a result of the selection operation of the operator 9 on the specific image 41.

### (Specifying Process of Placement Location)

Next, in the head-mounted device 11, a process of specifying the placement location P of the article 110 related to the work is performed (step S35).

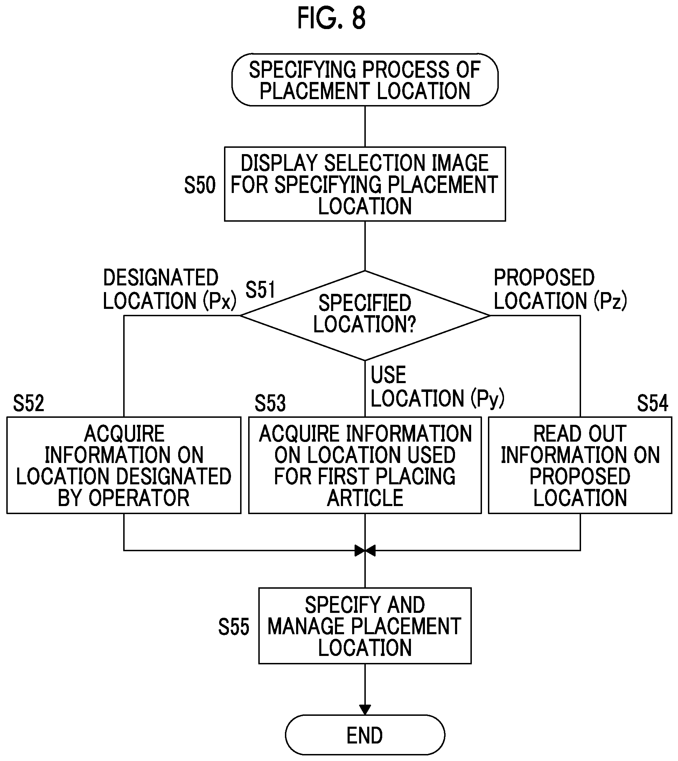

In the specifying process of the placement location P at this time, the control unit 26 displays a selection image 42 on the display unit 21, from which a method of specifying the placement location P can be selected (step S50 in FIG. 8).

The control unit 26 functions to specify any location of a designated location (Px), a use location (Py), or a proposed location (Pz) as the placement location P.

Here, the designated location (Px) is a location input and designated by the operator 9. The use location (Py) is a location used by the operator 9 for placing the article 110 related to the work, and is a location recognized and determined by the control unit 26 as the placement location P. The proposed location Pz is a location proposed by the control unit 26.

The selection image 42 is a content image from which the operator 9 can select any location of the designated location (Px), the use location (Py), and the proposed location (Pz) as the placement location P.

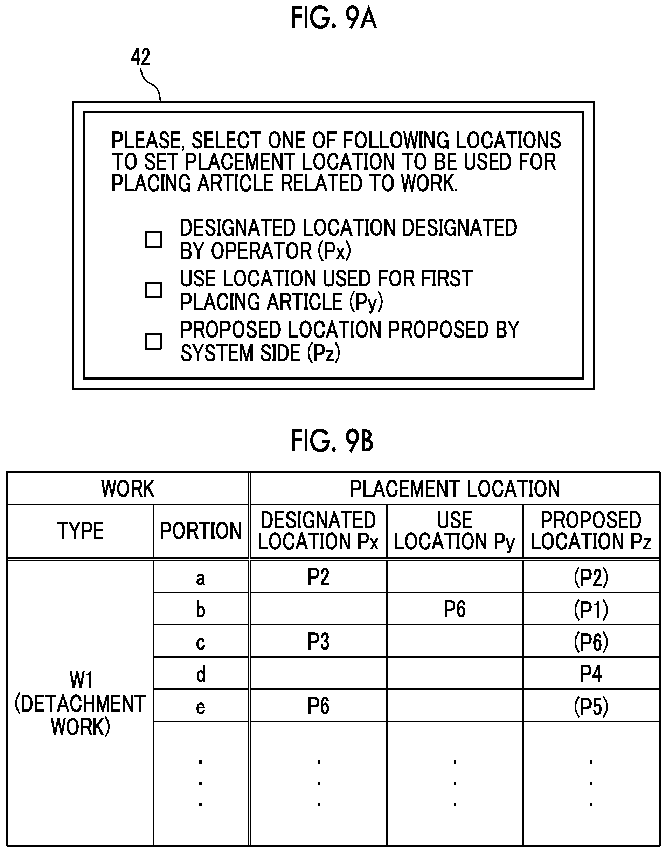

The selection image 42 is an image including message information and a selection item as illustrated in FIG. 9A.

An article related to the work in the selection image 42 directly becomes the detachment component 120 in a case of performing the detachment work W1. Meanwhile, in a case of specifying the placement location P of the detachment component 120, the placement location P may be specified in consideration of placing the tool 180 or the replacement component 160.

In the selection image 42 described above as an example, the operator 9 selects a display portion of a selection item of the designated location (Px), the use location (Py), and the proposed location (Pz) by pointing with the finger 95.

Then, the control unit 26 determines a location selected by the operator 9 in the selection image 42 (step S51). Accordingly, a specific method of the placement location P is determined.

In a case where the designated location (Px) is selected in step S51, information on the location designated by the operator 9 is acquired (step S52).

In this case, the designated location (Px) is designated by, for example, an operation of pointing to a location required by the operator 9 with the finger 95 with respect to the work site 8 of the work displayed on the display unit 21.

In addition, in this case, a range of the designated location (Px) is specified by an operation of drawing a range required by the operator 9. In addition, in a case where the operator 9 points to a required location, the range of the designated location (Px) may be specified by the control unit 26 presenting a certain range centered on the location.

In addition, in a case where the use location (Py) is selected in step S51, information on a location used by the operator 9 for first placing the article 110 related to the work at the work site 8 is acquired (step S53).

In this case, the use location (Py) is determined by the control unit 26 recognizing and analyzing the image information obtained by imaging the location at which the article 110 is placed in the first work (step) in the work.

In addition, in this case, a range of the use location (Py) is specified by the control unit 26 presenting a certain range centered on the location at which the article 110 is placed.

Further, in a case where the proposed location (Pz) is selected in step S51, the control unit 26 reads out information on the proposed placement location P (step S54).

In this case, the control unit 26 reads out the information on the proposed placement location P set in advance in response to the specified type and portion of work from the storage unit 24.

The proposed location (Pz) is automatically selected and set based on reference information and the like acquired from the work site 8 and a work content or the like of the working target 100. The reference information is a state required in a case of selecting and setting the placement location P. Specifically, the information is information on a relative distance between the operator 9 and the working target 100, a positional relationship, dimensions, or the like of various objects at the work site 8.

In the head-mounted device 11, the specifying process of the placement location P is performed, and thus the placement location P is specified and the specified content is managed (step S55).

FIG. 9B illustrates an example of management information on work for each portion and the placement location P assumed in a setting example of this description.

The placement location P is specified for each portion (a to e) of the work. In addition, the proposed location (Pz) is prepared for each of the portions (a to e) of the work.

In FIG. 9B, displaying of the P number without parentheses is the information on the placement location P actually specified in the specifying process. Specifically, the content will be described below.

The placement location P2 is prepared as the proposed location (Pz) for the detachment work W1 (W1a) on the portion a. The actual placement location P is specified as the placement location P2 designated by the operator 9. In this case, there is a relationship in which the specified placement location P2 of the designated location (Px) matches the proposed location (Pz).

The placement location P1 is prepared as the proposed location (Pz) for the detachment work W1 (W1b) on the portion b. The actual placement location P is specified as the placement location P6 used by the operator 9. In this case, there is a relationship in which the specified placement location P6 of the use location (Py) does not match the proposed location (Pz).

The placement location P6 is prepared as the proposed location (Pz) for the detachment work W1 (W1c) on the portion c. The actual placement location P is specified as the placement location P3 designated by the operator 9. In this case, there is a relationship in which the specified placement location P3 of the designated location (Px) does not match the proposed location (Pz).

The placement location P4 is prepared as the proposed location (Pz) for the detachment work W1 (W1d) on the portion d. The actual placement location P is specified as the placement location P4 of the proposed location (Pz). In this case, there is a relationship in which the specified placement location P4 matches the proposed location (Pz).

The placement location P5 is prepared as the proposed location (Pz) for the detachment work W1 (W1e) on the portion e. The actual placement location P is specified as the placement location P6 designated by the operator 9. In this case, there is a relationship in which the specified placement location P6 of the designated location (Px) does not match the proposed location (Pz).

As described above, the specifying process for the placement location is ended.

In addition, the information on the placement location P obtained by the placement location specifying process is stored and saved in the storage unit 24 for a required time.

Next, in the head-mounted device 11, it is determined whether or not the specified work is started (step S36 in FIG. 7).

An operation of the determination at this time is repeated until it is determined that the work is started.

### (Display Process of Information on Placement Location)

Then, in the head-mounted device 11, in a case where it is determined in step S36 that the work is started, a process of displaying the information on the placement location P is performed (step S37).

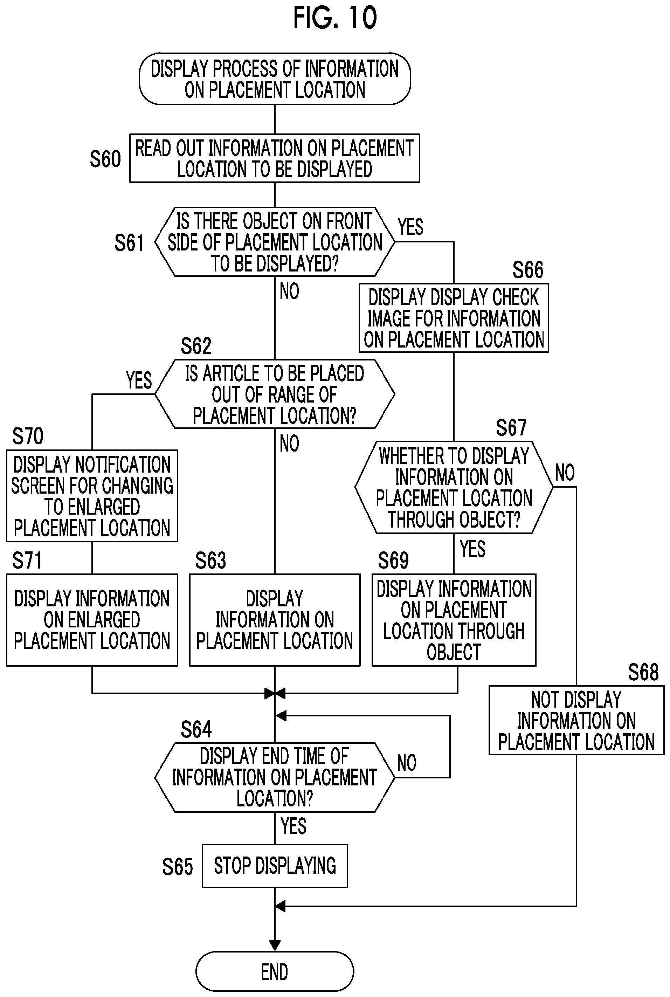

In the display process of the information on the placement location P at this time, the control unit 26 reads out the information on the placement location P to be displayed (step S60 in FIG. 10).

The control unit 26 reads out the placement location P specified for the type and the portion of the work from the information on the placement location P that is stored and managed in the storage unit 24.

In a setting example of this description, since the detachment work W1 on the portion a is performed, information on the placement location P2 specified for the detachment work W1a is read out (see FIG. 9B).

Next, in the display process of the information on the placement location P, it is determined whether or not there is an object on the front side of the placement location P to be displayed (step S61).

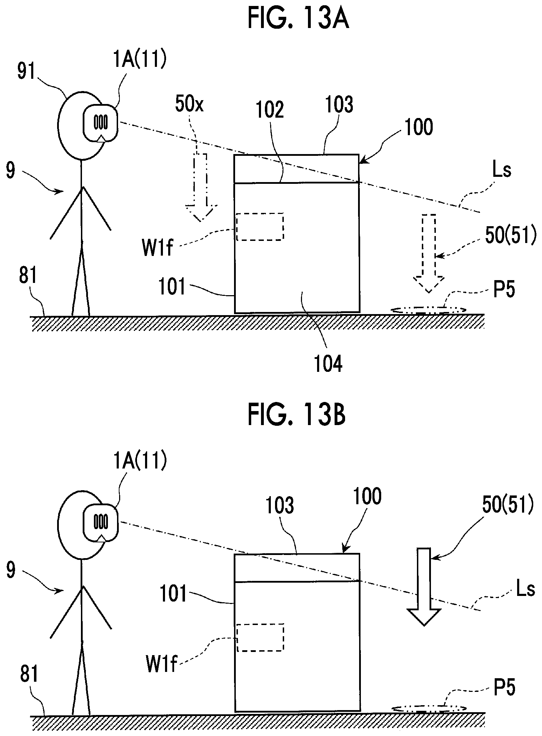

The fact that there is an object on the front side of the display placement location P means a case where the working target 100 is present at a position on the front side of the placement location P5 to be displayed as viewed from the operator 9 (see FIGS. 13A and 13B). In other words, this is a case where an object that hinders the work is present between the operator 9 and the placement location P5 to be displayed.

In a case where it is determined in step S61 that there is no object on the front side of the placement location P to be displayed, the process proceeds to next step S62. In step S62, it is determined whether or not the article 110 related to the work, which is to be placed in the specified placement location P, is out of a range of the placement location P.

The fact that the article 110 is out of the range of the placement location P means that a part of the article 110 related to the work is not completely placed within the range of the specified placement location P. In this case, the part of the article 110 that cannot be placed in the placement location P becomes often an obstacle in a case where the operator 9 moves.

Next, in a case where it is determined that the article 110 is not out of the range of the placement location P specified in step S62, the information on the placement location P is displayed on the display unit 21 (step S63).

At this time, the display is performed on a front side of the existing object such as the working target 100 on the display screen 21a of the display unit 21 (see FIG. 11).

In addition, the display at this time is continued until a time when a display end time of the information on the placement location P is reached (step S64). As the display end time, for example, a time when a predetermined elapse time is reached is applied.

Then, in a case where the display end time of the information on the placement location P is reached, the display of the information on the placement location P is stopped (step S65).

As described above, in the head-mounted device 11, the information on the placement location P specified in a case of starting the work is displayed on the display unit 21 as the support information 50.

Accordingly, the operator 9 does not have to be confused about the location at which the article 110 related to the work is to be placed at the work site 8. For example, in a case where a location at which the article 110 related to the work is to be placed is not prepared in advance, there may be no confusion about the location for placing the article 110.

In addition, with the head-mounted device 11, the location at which the article 110 related to the work is placed is managed as the specified placement location P. Therefore, the operator 9 does not have to be confused about the location at which the article 110 related to the work is placed.

In a setting example of this description, the operator 9 does not have to be confused about a location at which the detachment component 120 is to be placed or a location at which the detachment component 120 is placed.

Next, a portion of a special display process of the information on the placement location P will be described.

First, in a case where it is determined in step S61 that there is an object on the front side of the placement location P to be displayed, a display check image of the information on the placement location P is displayed (step S66).

FIGS. 13A and 13B illustrate a case where a detachment work W1f starting from the portion f of the front surface portion 101 of the working target 100 is performed and the placement location P5 is specified for the detachment work W1f.

In the work site 8 illustrated in FIGS. 13A and 13B, the working target 100 is present on the front side of the placement location P5 as viewed from the operator 9. In this case, the placement location P5 is the placement location P that is hidden behind the working target 100 and has a positional relationship that is not visible to the operator 9.

A one-dot chain line Ls in FIGS. 13A and 13B is a line indicating a lower limit of the field of view that can be visually recognized over the working target 100 (on the upper side) of the operator 9.

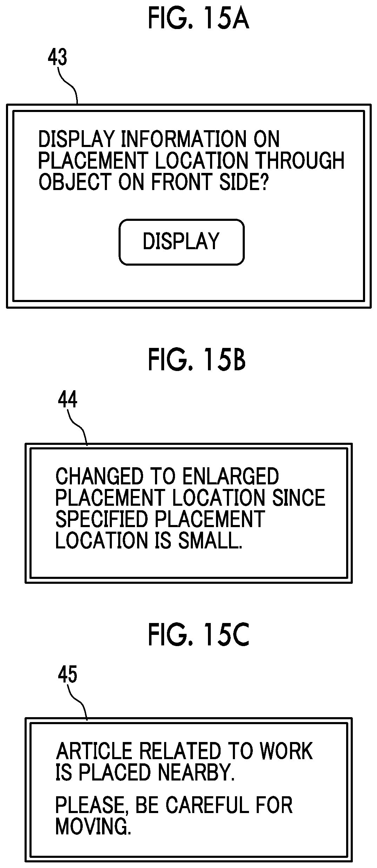

At this time, in the head-mounted device 11, the control unit 26 displays a display check image 43 illustrated in FIG. 15A on the display unit 21.

The display check image 43 is an image for checking whether or not the information on the placement location P is displayed through an object (working target 100) on a front side of the placement location P.

The display check image 43 is, for example, an image including message information and a selection item (see FIG. 15A).

In the display check image 43, the selection item of "display" is prepared to check only a case where the operator 9 wants to display.

Then, at this time, the control unit 26 determines a response result of the operator 9 with respect to the display check image 43 (step S67).

At this time, in a case where the operator 9 does not perform any operation on the display check image 43 until a predetermined elapse time is reached, the information on the placement location P to be displayed is not displayed (step S68).

The case of not performing any operation refers to a case where the operator 9 does not point to a portion of the selection item of "display" in the display check image 43 with the finger 95.

In FIG. 13A, a case where the information on the placement location P5 as the support information 50 to be displayed is not displayed is illustrated by a broken line.

Accordingly, the display of the information on the placement location P5 as the support information 50 may not interfere with the field of view of the operator 9 who performs the detachment work W1f.

That is, in a case where the information on the placement location P5 as the support information 50 is displayed on the front side of the working target 100 as usual, such display may interfere with the field of view of the operator 9 who performs the detachment work W1f. A display example of support information 50x illustrated by the two-dot chain line in FIG. 13A is an example of displaying on the front side of the working target 100 as usual.

On the other hand, in a case where the operator 9 points to the portion of the selection item of "display" in the display check image 43 with the finger 95, the information on the placement location P to be displayed is displayed through the object (step S69).

In FIG. 13B, a case where the information on the placement location P5 to be displayed is displayed as the support information 50 on a back side of the working target 100 is illustrated.

The display of the information on the placement location P5 at this time is a display in which at least a part of the information is visually recognized by the operator 9. In a case of the display of the support information 50 illustrated in FIG. 13B, a portion below the line Ls indicating a lower limit of the field of view is hidden by the working target 100 on the front side and is not visually recognized by the operator 9.

At least a part of the display of the support information 50 related to the placement location P is visually recognized by the operator 9. At this time, the display of the support information 50 makes it possible to inform the operator 9 of the presence of the placement location P and the like.

Accordingly, even in a case where there is an object on the front side of the placement location P to be displayed and the operator 9 cannot visually recognize the placement location P, the operator 9 can recognize the placement location P, which is not visible, when the operator 9 wants to check the non-visible placement location P.

Next, in a case where it is determined in step S62 that the article 110 is out of a range of the specified placement location P, a notification image in which the placement location P is changed to an enlarged placement location Pa is displayed (step S70 in FIG. 10).

Whether or not the article 110 is out of the range of the specified placement location P is determined by the control unit 26, for example, from a result of comparing dimensional information of the detachment component 120 or the like included in the information on the work with information on the range (maximum dimension portion) of the specified placement location P.

In FIG. 15B, a notification image 44 is illustrated.

The notification image 44 is configured with, for example, message information indicating that the specified placement location P is changed to the enlarged placement location Pa.

The enlarged placement location Pa is the placement location P having a relationship in which an area (maximum dimension portion) is larger than an area of the placement location P determined to have an excess portion.

Next, in the head-mounted device 11, information on the enlarged placement location Pa is displayed (step S71).

At this time, the control unit 26 selects the enlarged placement location Pa, and displays the information on the display unit 21. In addition, the display of the information on the enlarged placement location Pa is switched and performed after a predetermined elapse time elapses since the notification image is displayed.

A specific example of the enlarged placement location Pa will be described as follows, by using the setting example in FIG. 9B.

In the setting example in FIG. 9B, the operator 9 specifies the placement location P3 for the detachment work W1 on the portion c. In this case, the control unit 26 determines that the specified placement location P3 is, for example, the placement location P smaller than the proposed location (Pz) of the portion c, and displays the notification image 44. Next, the control unit 26 changes the placement location P3 to the placement location P6 that is larger than the placement location P3 and is also the proposed location (Pz). The placement location P6 at this time is the enlarged placement location Pa.

In a case where the placement location Pa is changed to the enlarged placement location Pa, the operator 9 may be not confused since the article 110 related to the work cannot be completely placed in the initially specified placement location P. In addition, in this case, an excess portion of the article 110 related to the work may not become an obstacle in a case where the operator 9 moves.

The information on the placement location P or the enlarged placement location Pa respectively displayed in steps S69 and S71 is displayed until a time when a display end time is reached (steps S64 and S65).

### (Warning Display Process)

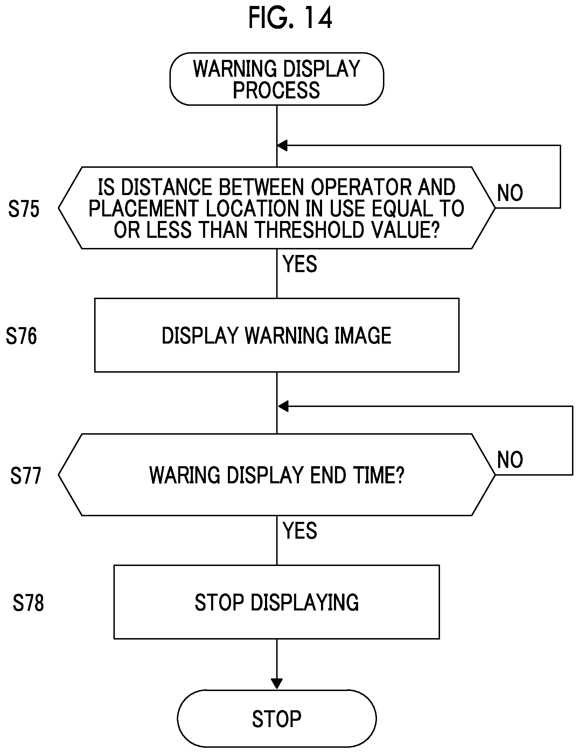

In addition, in the head-mounted device 11, a warning display process is also performed in parallel with the work support process (see FIG. 14).

In the warning display process, the control unit 26 performs monitoring of whether or not a distance between the operator 9 and the specified placement location P in use is equal to or less than a threshold value (step S75 in FIG. 14).

The distance at this time is a distance between the operator 9 when the operator 9 starts to move and the placement location P in use. In addition, the placement location P in use is the placement location P which is the specified placement location P and on which the article 110 related to the work is actually placed. The threshold value is set to any distance.

The monitoring described above is started and continued in a case where the operator 9 starts the work starts to move.

In a case where it is determined in step S75 that the distance is equal to or less than the threshold value, the warning image is displayed (step S76).

At this time, in the head-mounted device 11, the control unit 26 displays a warning image 45 illustrated in FIG. 15C on the display unit 21.

The warning image 45 is an image including message information or the like for alerting the operator 9.

The display of the warning image 45 at this time is continued until a time when a warning display end time is reached, and is stopped at the time (steps S77 and S78).

As the warning display end time, for example, a time when a predetermined elapse time is reached is applied.

By displaying the warning image 45, the operator 9 can avoid the risk of unintentionally touching the article 110 related to the work at the placement location P.

Then, the description of the work support process will be returned again.

In the head-mounted device 11, in a case where the detachment component 120 of the detachment work W1a is placed in the placement location P2, analysis or accumulation of information on a status of the placement location P2 is performed (step S38 in FIG. 7).

At this time, the control unit 26 analyzes and accumulates the information on the status of the placement location P2 by using the information obtained by imaging and detecting the placement location P in step S19.

Accordingly, in the head-mounted device 11, the detachment component 120 placed at the placement location P2 is recognized. In addition, in the head-mounted device 11, the information on the status of the placement location P2 is saved in the storage unit 24.

Next, in the head-mounted device 11, whether or not the work on the same portion of the same working target 100 continues is determined (step S39).

At this time, in a case where it is determined that the work on the same portion continues, the process returns to step S36, and the subsequent work is performed. In addition, at this time, the operations in and after step S37 related to the work support process are repeated in the same manner.

On the other hand, in the head-mounted device 11, in a case where it is determined in step S39 that the work on the same portion does not continue, whether or not there is work on another different portion is determined (step S40).

At this time, in a case where it is determined that there is work on the other portion, the process returns to step S34, and the work on the other portion is performed. In addition, in this case, the operations in and after step S34 related to the work support process are repeated in the same manner.

In a case where it is determined in step S40 that there is no work on the other portion, the work on one same working target 100 is ended.

In addition, in this case, the work support process is also ended.

Meanwhile, the specifying of the placement location P for placing the replacement component 160 or the tool 180, which is an example of the article 110 related to the work, may be performed in consideration of the specifying of the placement location P for placing the detachment component 120.

Meanwhile, the specifying of the placement location P for placing the replacement component 160 or the tool 180 may be performed independently of the specifying of the placement location P for placing the detachment component 120.

### Modification Examples.

The present invention is not limited to the configuration illustrated as Exemplary Embodiment 1. In the present invention, it is possible to make changes within a range that does not change the gist of each invention described in the claims. In addition, the present invention also includes the following modification examples, for example.

The head-mounted device 11 may adopt a glass-type housing as the device main body 12.

In a case where this type is adopted, the display unit 21 has a light transmission type.

In the case of the display unit 21 in a light transmission type, the work site 8 is visually recognized through the display unit 21 in a light transmission type.

In a case of the display unit 21 in a light transmission type, information on the placement location P as support information is displayed alone to be projected on a screen of the display unit 21.

In the display unit 21 in a light transmission type, the screen portion may be movable between a use position and an open position of the device main body 12. The use position is a position when the screen portion of the display unit 21 is used to face the eyes 92 of the operator 9. The open position is a position at which the screen portion of the display unit 21 is moved to a position away from the eyes 92 and the front of the eyes 92 is opened.

The work site 8 of work using the work support system 1 may be outdoors as long as space recognition, 3D mapping, and the like can be performed.

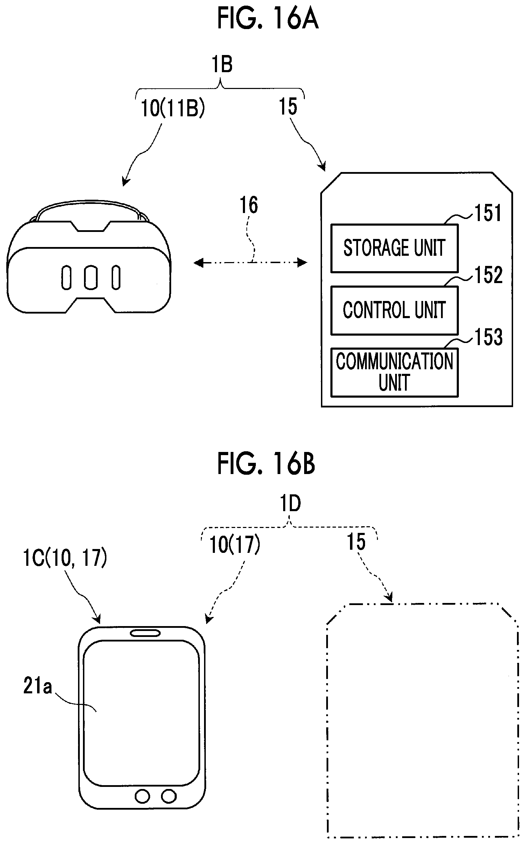

The work support system 1 may be configured as a work support system 1B consisting of the mobile device 10 and a server apparatus 15 (see FIG. 16A).

In the case of the work support system 1B, a head-mounted device 11B may be adopted as the head-mounted device 11 which is an example of the mobile device 10. The head-mounted device 11B is a device in which some of the storage unit 24 and the control unit 26 (see FIG. 3A) are equipped in the server apparatus 15. The server apparatus 15 is a device mainly including a computer, a storage device, and the like.

The server apparatus 15 constituting a part of the work support system 1B includes a storage unit 151, a control unit 152, a communication unit 153, and the like.

The storage unit 151 may store a part of information stored in the storage unit 24. The part of the information is a program related to the work support process, information on a working target, information on work, and information on a proposed placement location. Other information (information stored in the storage unit 24) may be stored. A part of the storage unit 151 may be constructed as a database for information other than the program.

The control unit 152 is configured to perform the work support process (including the placement location specifying process and the display process of information on the placement location). Accordingly, it is possible to reduce a load related to the information process of the control unit in the head-mounted device 11B.

In addition, in the case of the work support system 1B, the head-mounted device 11B and the server apparatus 15 are connected to each other by a data communication line 16 (see FIG. 16A). A type of the data communication line 16, a communication method, and the like are not particularly limited.

In addition, the work support system 1 may be configured as a work support system 1C consisting of only a portable type device 17, such as a tablet or a mobile phone, instead of the head-mounted device 11 as the mobile device 10 (see FIG. 16B).

Further, the work support system 1 may be configured as a work support system 1D consisting of the portable type device 17 and the server apparatus 15 (see FIG. 16B).

### (Supplementary Note)

(((1))) A work support system comprising:
   an imaging unit that images a work site at which an operator performs work on a working target;
   a display unit that displays information;
   a storage unit that stores the information; and
   a control unit that performs an information process and control,
   wherein the control unit specifies a placement location for placing an article related to the work at the work site, and displays information on the placement location on the display unit alone or in combination with a video captured by the imaging unit, as support information.
(((2))) The work support system according to (((1))),
   wherein the control unit specifies the placement location before the work is started or after first work in the work is ended.
(((3))) The work support system according to (((2))),
   wherein the control unit specifies, as the placement location, any location of a designated location that is input and designated by the operator, a use location that is determined as the placement location by the control unit using a location used by the operator for placing the article, and a proposed location that is proposed by the control unit.
(((4))) The work support system according to (((3))),
   wherein the control unit displays a selection image from which the operator selects any location of the designated location, the use location, and the proposed location as the placement location, on the display unit.
(((5))) The work support system according to any one of (((1))) to (((4))),
   wherein the control unit displays the information on the placement location when the work is started.
(((6))) The work support system according to (((5))), further comprising:
   a detection unit that detects a positional relationship between an object captured by the imaging unit and the operator,
   wherein in a case where based on information on the positional relationship detected by the detection unit, the positional relationship is determined such that the placement location is present on a rear side of the imaged object by using the operator as a reference, the control unit does not display the information on the placement location.
(((7))) The work support system according to (((5))), further comprising:
   a detection unit that detects a positional relationship between an object captured by the imaging unit and the operator,
   wherein in a case where based on information on the positional relationship detected by the detection unit, the positional relationship is determined such that the placement location is present on a rear side of the imaged object by using the operator as a reference, the control unit displays a selection image from which the operator selects whether to display the information on the placement location through the imaged object, on the display unit.
(((8))) The work support system according to any one of (((1))) to (((7))), further comprising:
   a detection unit that detects a positional relationship between an object captured by the imaging unit and the operator,
   wherein in a case where based on information on the positional relationship detected by the detection unit, it is determined that the operator approaches the placement location, the control unit displays warning information on the display unit.
(((9))) The work support system according to any one of (((1))) to (((8))),
   wherein in a case where it is determined that the article has a size out of a range of the placement location, the control unit displays information on a placement location that is enlarged than the placement location, on the display unit.
(((10))) The work support system according to any one of (((1))) to (((9))),
   wherein the work is detachment work of detaching a component from the working target, and the article is at least one of a detachment component detached by the detachment work, a replacement component, and a tool used for the detachment work.
(((11))) The work support system according to any one of (((1))) to (((10))),
   wherein the information on the placement location is an image including a mark indicating the placement location.
(((12))) The work support system according to any one of (((1))) to (((11))),
   wherein the information on the placement location is an image including a three-dimensional image in which the placement location is represented in three dimensions.
(((13))) The work support system according to any one of (((1))) to (((12))), further comprising:
   an operation unit that performs an input operation of the operator by tracking a motion of the operator pointing to an operation image displayed on the display unit.
(((14))) The work support system according to any one of (((1))) to (((13))),
   wherein the work support system is configured as a system including a mobile device that is carried and used by the operator.
(((15))) The work support system according to (((14))),
   wherein the mobile device is a head-mounted device that is worn on a head portion of the operator and is used.
(((16))) A program causing a computer to execute:
   a function of specifying a placement location for placing an article related to work performed on a working target by an operator at a work site of the work; and
   a function of displaying information on the placement location as support information.

With the work support system according to (((1))), it is possible to perform work support of preventing the operator from being confused about a location at which the article related to the work is to be placed by the operator or a location at which the article is placed by the operator at the work site of the work performed on the working target by the operator.

With the work support system according to (((2))), the information on the placement location used as the support information is managed as information specified in accordance with the work site at an appropriate time.

With the work support system according to (((3))), the degree of freedom of the specifying of the placement location is increased as compared with a case where the placement location is determined without an option.

With the work support system according to (((4))), it is possible to give an opportunity to the operator to select the specifying of the placement location.

With the work support system according to (((5))), the operator does not hesitate about a location at which the article related to the work is to be placed.

With the work support system according to (((6))), the display of the information on the placement location may not interfere with the field of view of the operator who performs the work.

With the work support system according to (((7))), the operator can recognize a placement location, which is not visible, when the operator wants to check the location.

With the work support system according to (((8))), it is possible to avoid a risk that the operator unintentionally touches the article related to the work at the placement location.

With the work support system according to (((9))), it is possible to avoid a situation in which the operator is confused since the article related to the work cannot be completely placed in the placement location, or a situation in which an excess portion of the article becomes an obstacle in a case where the operator moves.

With the work support system according to (((10))), it is possible to support work of preventing a location at which the detachment component detached in the detachment work, the replacement component or the tool used in the detachment work is to be placed from being unrecognized.

With the work support system according to (((11))), the placement location can be easily recognized as compared with a case where the placement location is not displayed as the image including the mark.

With the work support system according to (((12))), the placement location can be accurately recognized as compared with a case where the placement location is not displayed as the image including the three-dimensional image.

With the work support system according to (((13))), it is possible to easily perform the input operation of the information as compared with a case where the operation unit for performing the input operation of the operator by tracking the motion of the operator pointing to the operation image displayed on the display unit is not provided.

With the work support system according to (((14))), the operator can receive the support for the work by carrying the work support system, as compared with a case where the work support system is not configured as a system including the mobile device.

With the work support system according to (((15))), a hand of the operator is free and the operator can easily perform the work, as compared with a case where the mobile device is not the head-mounted device.

With the program according to (((16))), it is possible to prevent the operator from being confused about a location at which the article related to the work is to be placed by the operator or a location at which the article is placed by the operator at the work site of the work performed on the working target by the operator.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1, 1A, 1B, 1C, 1D: work support system
8: work site
9: operator
10: mobile device
11, 11B: head-mounted device (example of mobile device)
15: server apparatus
17: portable type device (example of mobile device)
21: display unit
22: imaging unit
23: detection unit
24, 151: storage unit
25: operation unit
26, 152: control unit
41: specific image (example of operation image)
42: selection image (example of operation image)
43: display check image (example of operation image)
45: warning image (example of warning display)
50: support information (information on placement location)
51: mark (example of support information)
52: three-dimensional image (example of support information)
100: working target
110: article related to work
120: detachment component
160: replacement component
180: tool
P, P1, P2, P3, P4, P5, P6: placement location
Pa: enlarged placement location
W1: detachment work (example of work)

## Claims

1. A work support system comprising:
an imaging unit that images a work site at which an operator performs work on a working target;
a display unit that displays information;
a storage unit that stores the information; and
a control unit that performs an information process and control,
wherein the control unit specifies a placement location for placing an article related to the work at the work site, and displays information on the placement location on the display unit alone or in combination with a video captured by the imaging unit, as support information.

2. The work support system according to claim 1,
wherein the control unit specifies the placement location before the work is started or after first work in the work is ended.

3. The work support system according to claim 2,
wherein the control unit specifies, as the placement location, any location of a designated location that is input and designated by the operator, a use location that is determined as the placement location by the control unit using a location used by the operator for placing the article, and a proposed location that is proposed by the control unit.

4. The work support system according to claim 3,
wherein the control unit displays a selection image from which the operator selects any location of the designated location, the use location, and the proposed location as the placement location, on the display unit.

5. The work support system according to any one of claims 1 to 4,
wherein the control unit displays the information on the placement location when the work is started.

6. The work support system according to claim 5, further comprising:
a detection unit that detects a positional relationship between an object captured by the imaging unit and the operator,
wherein in a case where based on information on the positional relationship detected by the detection unit, the positional relationship is determined such that the placement location is present on a rear side of the imaged object by using the operator as a reference, the control unit does not display the information on the placement location.

7. The work support system according to claim 5, further comprising:
a detection unit that detects a positional relationship between an object captured by the imaging unit and the operator,
wherein in a case where based on information on the positional relationship detected by the detection unit, the positional relationship is determined such that the placement location is present on a rear side of the imaged object by using the operator as a reference, the control unit displays a selection image from which the operator selects whether to display the information on the placement location through the imaged object, on the display unit.

8. The work support system according to any one of claims 1 to 7, further comprising:
a detection unit that detects a positional relationship between an object captured by the imaging unit and the operator,
wherein in a case where based on information on the positional relationship detected by the detection unit, it is determined that the operator approaches the placement location, the control unit displays warning information on the display unit.

9. The work support system according to any one of claims 1 to 8,
wherein in a case where it is determined that the article has a size out of a range of the placement location, the control unit displays information on a placement location that is enlarged than the placement location, on the display unit.

10. The work support system according to any one of claims 1 to 9,
wherein the work is detachment work of detaching a component from the working target, and the article is at least one of a detachment component detached by the detachment work, a replacement component, and a tool used for the detachment work.

11. The work support system according to any one of claims 1 to 10,
wherein the information on the placement location is an image including a mark indicating the placement location.

12. The work support system according to any one of claims 1 to 11,
wherein the information on the placement location is an image including a three-dimensional image in which the placement location is represented in three dimensions.

13. The work support system according to any one of claims 1 to 12, further comprising:
an operation unit that performs an input operation of the operator by tracking a motion of the operator pointing to an operation image displayed on the display unit.

14. The work support system according to any one of claims 1 to 13,
wherein the work support system is configured as a system including a mobile device that is carried and used by the operator.

15. The work support system according to claim 14,
wherein the mobile device is a head-mounted device that is worn on a head portion of the operator and is used.

16. A program causing a computer to execute:
a function of specifying a placement location for placing an article related to work performed on a working target by an operator at a work site of the work; and
a function of displaying information on the placement location as support information.
